# EUROPÄISCHE PATENTSCHRIFT

(11) **EP 2 431 224 B1**
(45) Veröffentlichungstag und Bekanntmachung des Hinweises auf die Patenterteilung: **28.05.2014**
(21) Anmeldenummer: 10009916.7
(22) Anmeldetag: 20.09.2010
(51) Int. Cl.: B60P 7/08

(54) **Vorrichtung zur Reibwertminderung beim Niederzurren**
Device for reducing friction coefficient in vertical lashing
Dispositif de réduction de la valeur de friction lors d'un amarrage vers le bas

(43) Veröffentlichungstag der Anmeldung: 21.03.2012
(73) Patentinhaber: Friedrich von Lien AG, 27404 Zeven (DE)
(72) Erfinder: Klez, Hans-Peter, 56743 Mendig (DE)
(74) Vertreter: Dörner, Kötter & Kollegen

(56) Entgegenhaltungen:
- EP-A1- 1 911 626
- EP-A2- 2 060 440
- DE-A1- 10 102 982
- DE-U1-202009 014 003

## Beschreibung

Die Erfindung betrifft eine Vorrichtung zur Reibwertminderung an Kanten beim Niederzurren bei der Ladungssicherung nach dem Patentanspruch 1. Die Erfindung betrifft weiterhin einen Zurrgurt zur Ladungssicherung, umfassend wenigstens eine Spanneinrichtung.

Bei der kraftschlüssigen Ladungssicherung, dem sogenannten Niederzurren, wird die Ladung durch über Zurrgurte indizierte Vorspannkraft auf die Ladefläche gepresst. Durch dieses Anpressen wird die Reibung zwischen der Ladung und der Ladefläche erhöht. Die Reibungskraft sichert letztendlich die Ladung. Werden Zurrgurte über Ladungskanten geführt, ist der Einsatz von Kantenschonern erforderlich. Durch derartige Kantenschoner werden die Zurrgurte beim Niederzurren geschützt. Zudem wird eine gleichmäßigere Verteilung der Vorspannung erzielt. Als Kantenschoner kommen beispielsweise separate Karton- oder Kunststoffecken zum Einsatz, welche an die Kanten der Ladung angelegt werden, wonach die Zurrgurte über diesen Kantenschonern verspannt werden. Es ist auch bekannt, schlauchartige Schoner aus Kevlar oder Kunststoff über den Zurrgurt zu stülpen, welche an den Kanten der Ladung positioniert werden. Weiter Vorrichtungen zur Ladungssicherung sidn bspw. In der DE 101 02 982 A1 und der DE 20 2009 014 003 U1 beschrieben.

Nachteilig an den vorbekannten Kantenschonern ist, dass diese die Kantenreibung nur unzureichend verringern, weshalb eine homogene Vorspannungsverteilung über den Zurrgurt nicht gewährleistet werden kann. Bei separaten Kantenschonern besteht zudem die Gefahr eines Verrutschens der Schoner während des Zurrvorgangs.

Hier will die Erfindung Abhilfe schaffen. Der Erfindung liegt die Aufgabe zu Grunde, eine Vorrichtung zur Reibwertminderung an Ladungskanten beim Niederzurren zu schaffen, welche eine gleichmäßige Verteilung der Vorspannung über den Zurrgut beim Niederzurren gewährleistet und bei der einer Positionsänderung während des Zurrvorgangs vermieden ist. Gemäß der Erfindung wird diese Aufgabe durch eine Vorrichtung mit den Merkmalen des Patentanspruchs 1 gelöst.

Mit der Erfindung ist eine Vorrichtung zur Reibwertminderung an Ladungskanten beim Niederzurren geschaffen, welche ein gleichmäßige Verteilung der Vorspannung über den Zurrgurt beim Niederzurren gewährleistet und bei der eine Positionsänderung während des Zurrvorgangs vermieden ist. Durch die schwenkbar an den Trägern angeordneten Backenteile ist eine flächige Anlage an unterschiedliche Kantenwinkel gewährleistet.

In Weiterbildung der Erfindung ist zwischen den Trägern wenigstens eine Umlenk- oder Führungsrolle angeordnet. Hierdurch ist eine Führung des Zurrgurts mit einem geringen Rollreibwert bewirkt, wodurch die Kontinuität der Vorspannung über den Zurrgurt weiter verbessert ist. Bevorzugt bildet wenigstens eine Umlenk- oder Führungsrolle die Schwenkachse eines Backenteils

In Weiterbildung der Erfindung weist wenigstens ein Backenteil eine Durchführung für einen Zurrgurt auf. Die Durchführung ermöglicht eine gute Führung des Zurrgurtes, wodurch eine Positionsänderung während des Zurrvorgangs vermieden ist. Vorteilhaft ist wenigstens ein Backenteil bereichsweise in Art eines C-Profils ausgebildet, wodurch die Durchführung gebildet ist.

In Ausgestaltung der Erfindung ist im Übergangsbereich der winklig zueinander angestellten Schenkel der Träger eine Führungsrolle zwischen diesen angeordnet. Hierdurch ist eine optimale Krafteinleitung der Vorspannkraft bewirkt; ein Verschieben der Vorrichtung ist so weiter vermieden. Bei vorteilhafter symmetrischer Ausbildung der Träger ist die Führungsrolle bevorzugt auf der Symmetrieachse angeordnet.

In Ausgestaltung der Erfindung sind die Schenkel der Träger in einem Winkel von 60 Grad zueinander angestellt. Hierdurch ist eine große Bewegungsfreiheit der schwenkbaren Backenteile verbunden mit einer hohen Stabilität der Vorrichtung erzielt.

In weiterer Ausgestaltung der Erfindung sind die Seitenwände wenigstens eines Backenteils in Richtung ihrer der Anlagefläche abgewandten Seite verjüngt ausgebildet. Hierdurch sind die Baugröße sowie das Gewicht der Vorrichtung reduziert, Durch eine abgeschrägte bzw. abgerundete Ausbildung der Seiten-wände ist zudem das Verletzungsrisiko verringert.

In Weiterbildung der Erfindung ist wenigstens ein Backenteil in wenigstens einem Winkel relativ zu den arretierbar ausgebildet. Hierdurch ist die Handhabung der erfindungsgemäßen Vorrichtung verbessert. Die Vorrichtung kann so bereits vor dem Spannen des Zurrgutes an das zu sichernde Ladungsgut angepasst werden.

In weiterer Ausgestaltung der Erfindung ist wenigstens eine Umlenk- oder Führungsrolle über ein Nadel-lager auf einer Achse rotierbar gelagert. Hierdurch ist eine hohe Leichtgängigkeit der Rolle und somit eine weitere Reibwertminderung beim Niederzurren bewirkt.

Bevorzugt sind die Träger und/oder wenigstens ein Backenteil aus Kunststoff und / oder Metallwerkstoffen hergestellt.

Der Erfindung liegt weiterhin die Aufgabe zu Grunde, einen Zurrgurt zur Ladungssicherung zu schaffen, der ein Niederzurren mit homogener Vorspannung über den Zurrgurt beim Niederzurren ermöglicht. Gemäß der Erfindung wird diese Aufgabe durch die Merkmale des kennzeichnenden Teils des Patentanspruchs 13 gelöst.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

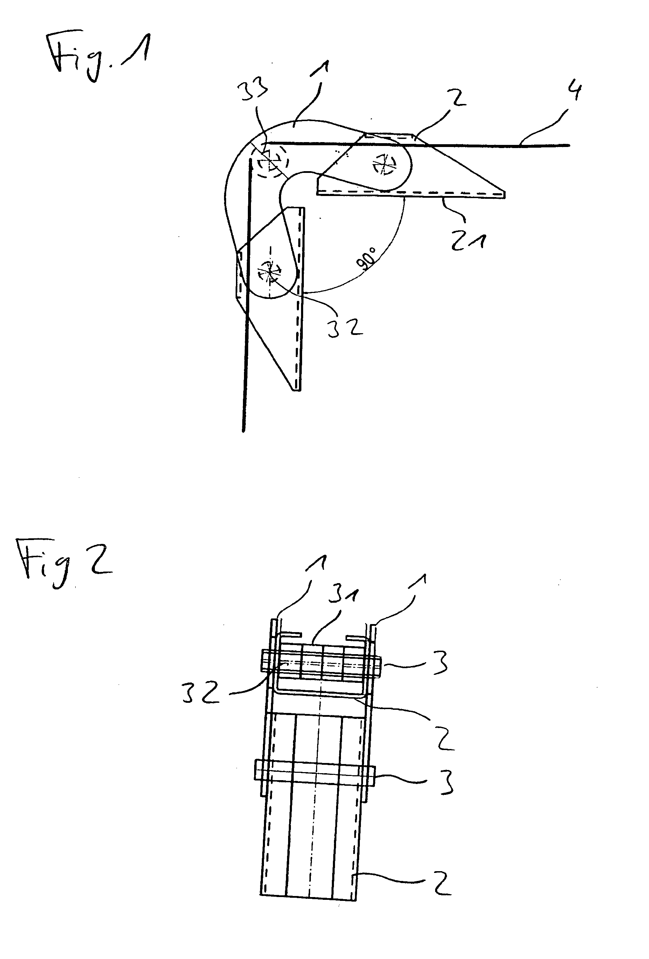

- Figur 1: die Darstellung einer Vorrichtung zur Reibwertminderung in der Seitenansicht;
- Figur 2: die Darstellung der Vorrichtung aus Figur 1 in der Ansicht von vorne;
- Figur 3: die Darstellung eines Trägers der Vorrichtung gemäß Figur 1 in der Seitenansicht;
- Figur 4: die Darstellung eines Backenteils der Vorrichtung gemäß Figur 1 in der Seitenansicht;
- Figur 5: die Darstellung einer Rolle mit Nadellager der Vorrichtung gemäß Figur 1 in der Seitenansicht (a) und der Draufsicht (b);

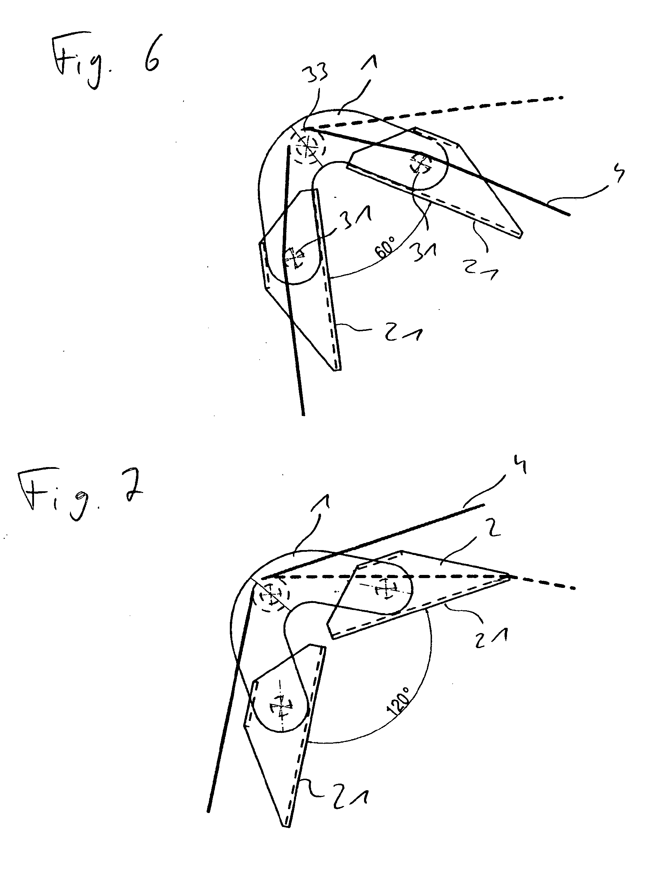

- Figur 6: die Darstellung der Vorrichtung gemäß Figur 1 mit in 60 Grad zueinander angestellten Backenteilen;
- Figur 7: die Darstellung der Vorrichtung gemäß Figur 1 mit in 120 Grad zueinander angestellten Backenteilen;
- Figur 8: die Darstellung einer Vorrichtung zur Reibwertminderung in einer weiteren Ausführungsform in der Seitenansicht und
- Figur 9: die Darstellung der Vorrichtung aus Figur 8 in der Ansicht von vorne.

Die als Ausführungsbeispiel gewählte Vorrichtung zur Reibwertminderung an Ladungskanten beim Niederzurren besteht im Wesentlichen aus zwei parallel zueinander angeordneten Trägern 1, die über Achsen 3 miteinander verbunden sind und an deren Schenkeln 11 jeweils ein Backenteil 2 schwenkbar angeordnet ist.

Die Träger 1 sind im Ausführungsbeispiel aus Stahlblech hergestellt. Sie weisen zwei in einem Winkel von 60 Grad zueinander angestellte Schenkel 11 auf, welche bogenförmig ineinander übergehen. Durch den bogenförmigen Übergang ist eine Kerbwirkung vermieden, wodurch die Stabilität der Träger 1 erhöht ist. Die Träger 1 sind symmetrisch ausgebildet. An ihren Enden sowie auf der ihrer Symmetrieachse sind in die Träger Bohrungen 12 zur Aufnahme einer Achse 3 eingebracht. Die endseitigen Achsen 3 dienen der schwenkbaren Aufnahme eines Backenteils 2 und nehmen jeweils eine Führungsrolle 31 auf, welche auf der jeweiligen Achse 3 über ein Nadellager 32 rotierbar gelagert ist. Die auf der Symmetrieachse der Träger 1 angeordnete Achse 3 nimmt eine Umlenkrolle 33 auf, die ebenfalls auf der Achse 3 über ein Nadellager 32 rotierbar gelagert ist. Die Umlenkrolle 33 dient der Um-lenkung des Zurrgurtes 4 und bewirkt eine Zentrale Krafteinleitung in die Träger 1, wodurch eine gleichmäßige Kraftverteilung auf die Backenteile erzielt ist.

Die Backenteile 2 sind im Ausführungsbeispiel ebenfalls aus Stahlblech hergestellt. Sie weisen eine ebene Anlagefläche 21 auf, welche durch zwei parallel zueinander orthogonal zur Anlagefläche 21 angeformte Seitenwände 22 begrenzt ist. Die Seitenwände 22 sind in Richtung ihrer der Anlagefläche 21 abgewandten Oberseite über Schrägen verjüngt ausgeführt und an ihrer Oberseite zueinander in einem Winkel von 90 Grad abgewinkelt, so dass in diesem Bereich eine Form in Art eines C-Profils gebildet ist. Zwischen den abgewinkelten Stegen der Seitenwände ist eine Durchführung 23 für den Zurrgurt 4 gebildet.

Die Vorrichtung kann an einem Zurrgurt angebracht werden, in dem dieser in die Durchführung der Backenteile 2 eingebracht wird. Dabei folgen die schwenkbar an den Trägern 1 befestigten Backenteile 2 der Ausrichtung des Zurrgurtes 4.Die Fixierung der Vorrichtung an dem Zurrgurt kann entweder vor der Positionierung an dem Ladegut oder auch nachfolgend erfolgen. Beim Zurrvorgang wird der Zurrgurt durch die C-förmige Durchführung der Backenteile bewegt, wobei er um die auf den Achse 3 drehbaren Rollen 31 bewegt und über die Umlenkrolle 33 umgelenkt wird. Der Zurrgurt gleitet dabei auf den über Nadellagern 32 gelagerten Umlenk- oder Führungsrolle 31, 33. Dabei erfolgt eine gleichmäßige Krafteinleitung über die Führungsrollen 31 in die Anlageflächen 21 der Backenteile. Die Anlagenflächen 21 können zur Erhöhung des Reibwertes zur Ladung geriffelt ausgeführt oder mit einer Beschichtung mit hohem Reibwert versehen sein.

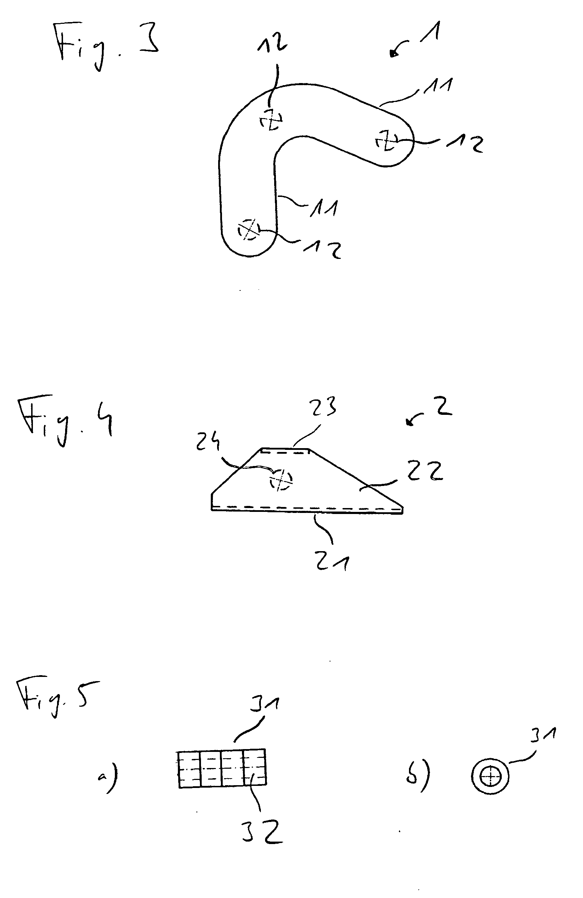

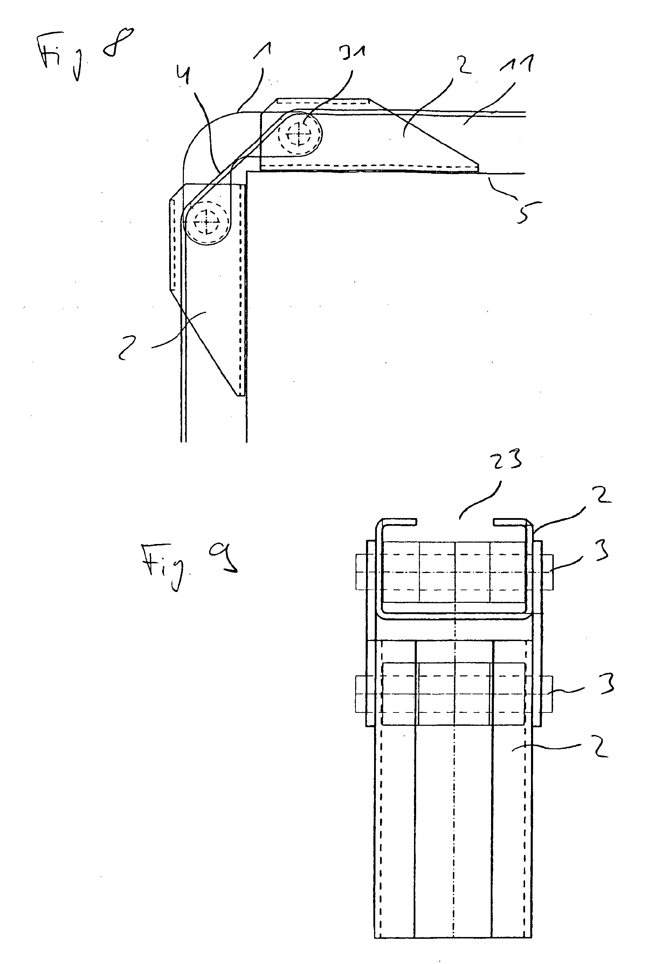

Im Ausführungsbeispiel gemäß Figur 8 ist keine Umlenkrolle 33 angeordnet. Der Zurrgurt 4 ist direkt über die auf den Schwenkachsen 3 der Backenteile 2 über Nadellager gelagerten Führungsrollen 31 geführt. In dieser Ausführungsform ist darauf zu achten, dass die Anlageflächen 21 der Backen 2 der Schenkel 11 der Träger 1 derart beabstandet zueinander positioniert sind, dass ein Kontakt zwischen den Kanten der Anlageflächen 21 mit dem Zurrgurt 4 ausgeschlossen ist. In Figur 4 ist die Anlage der Backenteile 2 an einem Ladungsgut 5 angedeutet, Die Schenkel 11 der Träger 1 können auch länger ausgebildet sein. Es können auch auf einem Schenkel 11 mehrere Backenelemente 2 angeordnet sein. Dies kann beispielsweise zur Ladungssicherung vom zylinderförmigen Gut vorteilhaft sein.

In einer erweiterten Ausführungsform kann an den Backenteilen 2 auch eine Rastvorrichtung angeordnet sein, die eine Fixierung einer Winkelstellung relativ zu den Trägern ermöglicht. Auf diese Weise könnte bereits im Vorfeld der Ladungssicherung eine Einstellung der Backenteile 2, beispielsweise in einem Winkel von 90 Grad zueinander für Quaderförmige Ladungsgüter, erfolgen. Möglichkeiten zur Realisierung einer solchen Rastvorrichtung, beispielsweise in Form einer Verzahnung im Zusammenspiel mit einem Federstift, sind dem Fachmann in unterschiedlichsten Gestaltungen hinreichend bekannt und bedürfen daher an dieser Stelle keiner eingehenden Beschreibung.

## Patentansprüche

1. Vorrichtung zur Reibungsminderung an Ladungskanten beim Niederzurren, umfassend zwei Träger (1) mit zwei einem Winkel zueinander angestellten Schenkeln (11), **dadurch gekennzeichnet, daß** die Schenkeln beabstandet zueinander über wenigstens zwei Achsen (3) miteinander verbunden sind, wobei an jedem Schenkel (11) wenigstens ein Backenteil (2) schwenkbar angeordnet ist, welches eine Anlagefläche (21) aufweist, die von zwei Seitenwänden(22) begrenzt ist und wobei die Anlageflächen (21) der Backenteile (2) der beiden Schenkel (11) in eine zueinander zugewandte Position schwenkbar sind.

2. Vorrichtung nach Anspruch 1, **dadurch gekennzeichnet, dass** zwischen den Trägern (1) wenigstens eine Umlenk- oder Führungsrolle (31, 33) angeordnet ist.

3. Vorrichtung nach Anspruch 2, **dadurch gekennzeichnet, dass** wenigstens eine Führungsrolle (31) eine Schwenkachse eines Backenteils bildet.

4. Vorrichtung nach einem der vorgenannten Ansprüche, **dadurch gekennzeichnet, dass** wenigstens ein Backenteil (2) eine Durchführung (23) für einen Zurrgurt (4) aufweist.

5. Vorrichtung nach einem der vorgenannten Ansprüche, **dadurch gekennzeichnet, dass** wenigstens ein Backenteil (2) bereichsweise in Art eines C -Profils ausgebildet ist.

6. Vorrichtung nach einem der vorgenannten Ansprüche, **dadurch gekennzeichnet, dass** die Träger (1) symmetrisch ausgebildet sind.

7. Vorrichtung nach einem der vorgenannten Ansprüche, **dadurch gekennzeichnet, dass** im Übergangsbereich der winklig zueinander angestellten Schenkel (11) der Träger (1) eine Umlenkrolle (33) zwischen diesen angeordnet ist.

8. Vorrichtung nach einem der vorgenannten Ansprüche, **dadurch gekennzeichnet, dass** die Schenkel (11) der Träger (1) in einem Winkel von 60 Grad zueinander angestellt sind.

9. Vorrichtung nach einem der vorgenannten Ansprüche, **dadurch gekennzeichnet, dass** die Seitenwände (22) wenigstens eines Backenteils (2) in Richtung ihrer der Anlagefläche (21) abgewandten Seite verjüngt ausgebildet sind.

10. Vorrichtung nach einem der vorgenannten Ansprüche, **dadurch gekennzeichnet, dass** wenigstens ein Backenteil (2) in wenigstens einem Winkel relativ zu des Trägern (1) arretierbar ausgebildet ist.

11. Vorrichtung nach einem Ansprüche 2 bis 10, **dadurch gekennzeichnet, dass** wenigstens eine Umlenk- oder Führungsrolle (31, 33) über ein Nadellager (32) auf einer Achse (3) rotierbar gelagert ist.

12. Vorrichtung nach einem der vorgenannten Ansprüche, **dadurch gekennzeichnet, dass** die Träger (1) und/oder wenigstens ein Backenteil (2) aus Kunststoff hergestellt sind.

13. Zurrgurt zur Ladungssicherung, umfassend wenigstens eine Spanneinrichtung, **dadurch gekennzeichnet, dass** wenigstens eine Vorrichtung nach einem der vorgenannten Ansprüche angeordnet ist.

## Claims

1. Device for reducing the friction coefficient of vertical lashing at load edges, comprising two supports (1) with two legs (11) set at an angle to one another, **characterised in that** the legs are connected to one another at a distance via at least two axes (3), where at least one jaw part (2) is arranged pivotably on each leg (11), which jaw part has a contact surface (21) which is bounded by two side walls (22), and where the contact surfaces (21) of the jaw parts (2) of the two legs (11) can be pivoted into a position facing one another.

2. Device in accordance with claim 1, **characterised in that** at least one deflecting or guiding roller (31, 33) is arranged between the supports (1).

3. Device in accordance with claim 2, **characterised in that** at least one guiding roller (31) forms a pivoting axis of one jaw part.

4. Device in accordance with any of the aforementioned claims, **characterised in that** at least one jaw part (2) has an opening (23) for the passage of a lashing strap (4).

5. Device in accordance with any of the aforementioned claims, **characterised in that** at least one jaw part (2) is formed in certain parts in the manner of a C profile.

6. Device in accordance with any of the aforementioned claims, **characterised in that** the supports (1) are formed symmetrically.

7. Device in accordance with any of the aforementioned claims, **characterised in that** a deflecting roller (33) is arranged in the transition area between the legs (11) of the supports (1) set at an angle to one another.

8. Device in accordance with any of the aforementioned claims, **characterised in that** the legs (11) of the supports (1) are set at an angle of 60 degrees to one another.

9. Device in accordance with any of the aforementioned claims, **characterised in that** the side walls (22) of at least one jaw part (2) taper towards their side facing away from the contact surface (21).

10. Device in accordance with any of the aforementioned claims, **characterised in that** at least one jaw part (2) is formed to be locked at at least one angle with reference to their supports (1).

11. Device in accordance with any of the claims 2 to 10, **characterised in that** at least one deflecting or guiding roller (31, 33) is mounted on a needle bearing (32) to rotate on an axle (3).

12. Device in accordance with any of the aforementioned claims, **characterised in that** the supports (1) and/or at least one jaw part (2) are made of plastic.

13. Lashing strap for securing a load, comprising at least one tensioning device, **characterised in that** at least one device in accordance with the aforementioned claims is arranged.

## Revendications

1. Dispositif de réduction de la friction au niveau des arêtes d'un chargement lors d'un amarrage vers le bas, comprenant deux supports (1) avec deux branches (11) en angle l'une par rapport à l'autre, **caractérisé en ce que** les branches sont reliées entre elles à distance l'une de l'autre via au moins deux axes (3), sachant que sur chaque branche (11) se trouve au moins une pièce de mâchoire (2) agencée pivotante et présentant une surface d'applique (21) limitée par deux parois latérales (22) et sachant que les surfaces d'applique (21) des pièces de mâchoires (2) des deux branches (11) peuvent pivoter dans une position les faisant se regarder l'une l'autre.

2. Dispositif selon la revendication 1, **caractérisé en ce qu'**entre les supports (1) est agencé au moins un rouleau de renvoi ou de guidage (31, 33).

3. Dispositif selon la revendication 2, **caractérisé en ce qu'**au moins un rouleau de guidage (31) forme un axe de pivotement d'une pièce de mâchoire.

4. Dispositif selon l'une des revendications précédentes, **caractérisé en ce qu'**au moins une pièce de mâchoire (2) présente un moyen de passage (23) d'une sangle d'amarrage (4).

5. Dispositif selon l'une des revendications précédentes, **caractérisé en ce qu'**au moins une pièce de mâchoire (2) est configurée au moins localement avec un profil en forme de C.

6. Dispositif selon l'une des revendications précédentes, **caractérisé en ce que** les supports (1) sont configurés de manière symétrique.

7. Dispositif selon l'une des revendications précédentes, **caractérisé en ce que** dans la zone de transition des branches (11) des supports (1) agencées en angle les unes par rapport aux autres, un rouleau de renvoi (33) est agencé entremis.

8. Dispositif selon l'une des revendications précédentes, **caractérisé en ce que** les branches (11) des supports (1) forment un angle de 60 degrés entre elles.

9. Dispositif selon l'une des revendications précédentes, **caractérisé en ce que** les parois latérales (22) d'au moins une pièce de mâchoire (2) sont configurées s'amincissant en direction du côté opposé à leur surface d'applique (21).

10. Dispositif selon l'une des revendications précédentes, **caractérisé en ce qu'**au moins une pièce de mâchoire (2) est configurée verrouillable selon au moins un angle relativement aux supports (1).

11. Dispositif selon l'une des revendications 2 à 10, **caractérisé en ce qu'**au moins un rouleau de renvoi ou de guidage (31, 33) est en appui rotatif sur un axe (3) via un roulement à aiguilles (32).

12. Dispositif selon l'une des revendications précédentes, **caractérisé en ce que** les supports (1) et/ou au moins une pièce de mâchoire (2) sont fabriqués en matière plastique.

13. Sangle d'amarrage pour sécuriser une charge, comprenant au moins un dispositif tendeur, **caractérisée en ce qu'**au moins un dispositif selon l'une des revendications précédentes est agencé.
